# EUROPÄISCHE PATENTSCHRIFT

(11) **EP 2 455 639 B1**
(45) Veröffentlichungstag und Bekanntmachung des Hinweises auf die Patenterteilung: **07.01.2015**
(21) Anmeldenummer: 11185549.0
(22) Anmeldetag: 18.10.2011
(51) Int. Cl.: F16H 41/30, F16H 45/02, F16H 59/14, F16H 59/72, F16H 61/50

(54) **Verfahren zum Betreiben einer hydrodynamischen Kopplungseinrichtung des offenen 3-Leitungs-Typs**
Method for operating a hydrodynamic coupling device of the open 3-conduit type
Procédé de fonctionnement d'un dispositif de couplage hydrodynamique du type à trois conduites ouvert

(30) Priorität: 17.11.2010 DE 102010044032
(43) Veröffentlichungstag der Anmeldung: 23.05.2012
(73) Patentinhaber: ZF Friedrichshafen AG, 88038 Friedrichshafen (DE)
(72) Erfinder: Rieß, Thomas, 97437 Haßfurt (DE); Selinka, Christian, 97490 Poppenhausen (DE); Pümmler, Stefan, 97493 Bergrheinfeld (DE); Grau, Günter, 97230 Estenfeld (DE)

(56) Entgegenhaltungen:
- JP-A- 2 017 262
- JP-A- 11 063 208
- JP-A- 62 072 958
- US-A1- 2003 042 098
- US-A1- 2004 226 795

## Beschreibung

Die vorliegende Erfindung betrifft ein Verfahren zum Betreiben einer hydrodynamischen Kopplungseinrichtung, beispielsweise hydrodynamischer Drehmomentwandler, des offenen 3-Leitungs-Typs.

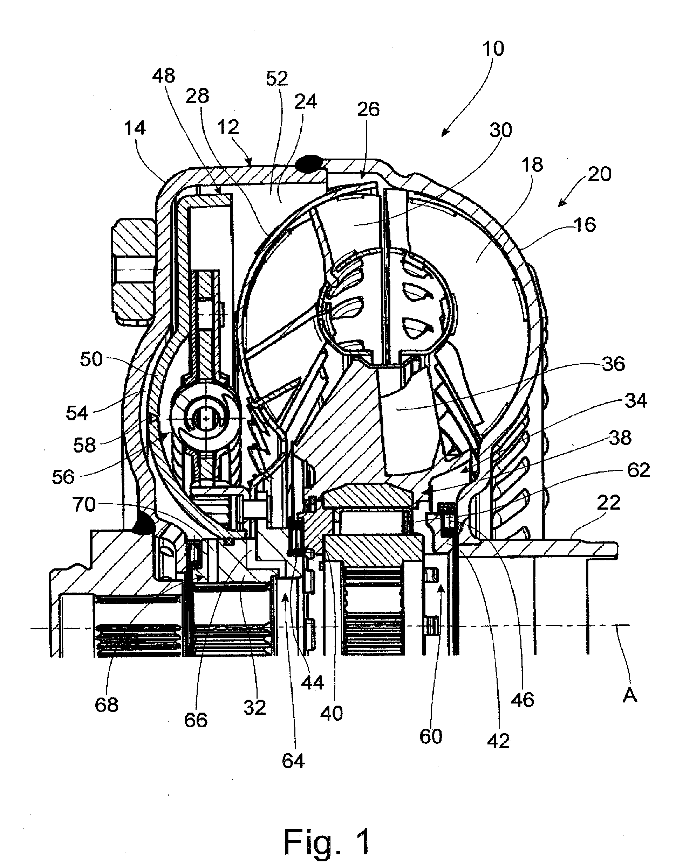

Eine derartige hydrodynamische Kopplungseinrichtung ist in Fig. 1 dargestellt und dort allgemein mit 10 bezeichnet. Sie umfasst ein Gehäuse 12 mit zwei Gehäuseschalen 14, 16. Die Gehäuseschale 14 ist in einem Antriebsstrang einem Antriebsaggregat zugewandt positioniert und über eine nicht dargestellte Kopplungsanordnung, wie z. B. Flexplatte, damit zur Drehung um eine Drehachse A gekoppelt. Die Gehäuseschale 16, die in ihrem radial äußeren Bereich fluiddicht, beispielsweise durch Verschweißung mit der Gehäuseschale 14 verbunden ist, ist einem Getriebe zugewandt zu positionieren und bildet mit an einer Innenseite derselbe getragenen Pumpenradschaufeln 18 ein allgemein mit 20 bezeichnetes Pumpenrad. Eine am radial inneren Bereich der Gehäuseschale 16 vorgesehene Pumpennabe 22 kann in ein Getriebe eingreifend positioniert werden und beispielsweise zum Antrieb einer dort vorgesehenen Fluidpumpe, wie z. B. Ölpumpe, genutzt werden.

In einem Innenraum 24 des Gehäuses 12 ist dem Pumpenrad 20 axial gegenüberliegend ein Turbinenrad 26 angeordnet. Dieses trägt an einer Turbinenradschale 28 eine Mehrzahl von in Umfangsrichtung aufeinander folgenden Turbinenradschaufeln 30. Radial innen ist die Turbinenradschale 28 an eine als Abtriebsorgan wirksame Turbinenradnabe 32 angebunden. Diese kann über eine Innenverzahnung mit einer Getriebeeingangswelle zur gemeinsamen Drehung um die Drehachse A gekoppelt werden.

Im radial inneren Bereich liegt axial zwischen dem Pumpenrad 20 und dem Turbinenrad 24 ein Leitrad 34 mit seinen Leitradschaufeln 36. Das Leitrad 34 weist eine allgemein mit 38 bezeichnete Freilaufanordnung auf, welche eine Rotation der Leitradschaufeln 36 um die Drehachse A in nur einer Drehrichtung zulässt. In axialer Richtung ist das Leitrad 34 bzw. die Freilaufanordnung 38 desselben über zwei Druckscheiben 40, 42 und jeweilige Axiallager 44, 46 bezüglich des Turbinenrads 26 bzw. der als Abtriebsorgan wirksamen Turbinenradnabe 32 einerseits und des Gehäuses 12 bzw. der Gehäuseschale 16 andererseits abgestützt.

Im Innenraum 24 ist weiterhin eine Überbrückungskupplung 48 vorgesehen. Diese umfasst einen axial bewegbaren Kupplungskolben 50, welcher den Innenraum 24 in einen auch das Turbinenrad 26 enthaltenden ersten Raumbereich 52 und einen im Wesentlichen zwischen dem Kupplungskolben 50 und der Gehäuseschale 14 gebildeten zweiten Raumbereich 54 unterteilt. Radial innen ist der Kupplungskolben 50 auf der Turbinenradnabe 32 fluiddicht getragen bzw. axial bewegbar, so dass dort keine Fluidaustauschverbindung zwischen den beiden Raumbereichen 52, 54 besteht. Die Drehmomentübertragungsverbindung zwischen dem Kupplungskolben 50 und der Turbinenradnabe 32 erfolgt über eine Torsionsschwingungsdämpferanordnung 56, deren Eingangsbereich an den Kupplungskolben 50 angebunden ist und deren Ausgangsbereich an die Turbinenradnabe 32 angebunden ist. Zwischen dem Eingangsbereich und dem Ausgangsbereich wirken beispielsweise als Schraubendruckfedern ausgebildete Dämpferelemente, die eine Relativdrehung zwischen Eingangsbereich und Ausgangsbereich zulassen. Es sei hier darauf hingewiesen, dass selbstverständlich auch im Drehmomentübertragungsweg zwischen der Turbinenradschale 28 und der Turbinenradnabe 32 ein derartiger Torsionsschwingungsdämpfer wirken kann bzw. dass zwei Torsionsschwingungsdämpfer seriell wirksam sein können und beispielsweise die Turbinenradschale 28 an einen Zwischenbereich zwischen den beiden Torsionsschwingungsdämpfern angebunden sein kann.

Im Einrückzustand der Überbrückungskupplung 48 ist der Kupplungskolben 50 mit seinem radial äußeren Bereich gegen eine Innenoberfläche des Gehäuses 12, hier der Gehäuseschale 14, pressbar. Dazu kann beispielsweise am Kupplungskolben 50 ein Reibbelag vorgesehen sein. Es ist hier darauf hinzuweisen, dass die Überbrückungskupplung 48 auch mehrere lamellenartige Reibelemente aufweisen kann, von welchen einige mit dem Kupplungskolben 50 und einige mit dem Gehäuse 12 drehbar gekoppelt sind und welche durch Bewegen des Kupplungskolbens 50 in Richtung Einrücken gegeneinander gepresst werden können.

Im ausgerückten Zustand der Überbrückungskupplung ist der Kupplungskolben 50 radial außen so positioniert bzw. hier von der Gehäuseschale 14 weg bewegt, dass im radial äußeren Bereich des Kupplungskolbens 50 eine Verbindung zwischen den beiden Raumbereichen 52, 54 besteht, woher die Bezeichnung "offen" resultiert. Um auch im eingerückten Zustand der Überbrückungskupplung, also wenn der Kupplungskolben 50 radial außen an der Gehäuseschale 14 anliegt, einen Fluidaustausch zwischen den beiden Raumbereichen 52, 54 zuzulassen, ist es beispielsweise möglich, einen an dem Kupplungskolben 50 vorgesehenen Reibbelag mit Belagsnuten zu versehen, so dass gleichzeitig auch Wärme aus diesem Bereich des Reibbelags abgeführt werden kann. Alternativ oder zusätzlich ist es möglich, eine oder mehrere Öffnungen 58 im Kupplungskolben 50 vorzusehen, so dass entsprechend der im Innenraum 24 eingestellten Druckverhältnisse Fluid vom ersten Raumbereich 52 zum zweiten Raumbereich 54 oder umgekehrt strömen kann.

Zur Versorgung des hydrodynamischen Drehmomentwandlers 10 mit Fluid ist ein erster Fluidkanalbereich 60 vorgesehen, welcher eine oder mehrere Öffnungen oder Nuten 62 im Druckring 42 umfassen kann. Dieser erste Fluidkanalbereich 60 führt somit in einen Bereich des Innenraums 24, der zwischen dem Pumpenrad 20 und dem Turbinenrad 26 liegt.

Ein zweiter Fluidkanalbereich 64 umfasst beispielsweise eine oder mehrere Öffnungen 66 in der Turbinenradnabe 32 und führt zu einem im Wesentlichen zwischen dem Turbinenrad 26 und dem Kupplungskolben 50 gebildeten Bereich des Innenraums 24. Sowohl der erste Fluidkanalbereich 60, als auch der zweite Fluidkanalbereich 64 führen also somit in den ersten Raumbereich 52. Wie im Folgenden noch dargelegt, kann jeder dieser Fluidkanalbereiche 60, 64 zur Fluidzufuhr oder/und Fluidabfuhr zu bzw. aus dem ersten Raumbereich 52 genutzt werden. Ein dritter Fluidkanalbereich 68 umfasst beispielsweise eine oder mehrere Öffnungen 70 in der Turbinenradnabe 32 und führt in den zweiten Raumbereich 54. Durch das Zuführen von Fluid über den dritten Kanalbereich 70 kann der Fluiddruck im zweiten Raumbereich 54 insbesondere auch im Verhältnis zu dem im ersten Raumbereich 52 vorherrschenden Fluiddruck erhöht werden, um somit eine den Kupplungskolben 50 in Richtung Ausrücken belastende Kraftwirkung zu erzeugen. Ist der Fluiddruck im ersten Raumbereich 52 im Verhältnis zu dem im zweiten Raumbereich 54 vorherrschenden Fluiddruck höher, wird eine den Kupplungskolben 50 in Richtung Einkuppeln belastende Kraftwirkung erzeugt.

Durch das Bereitstellen des ersten Fluidkanalbereichs 60 und des zweiten Fluidkanalbereichs 64 wird es möglich, auch im Einrückzustand der Überbrückungskupplung, also bei radial außen am Gehäuse 12 anliegendem Kupplungskolben 50, einen Fluidaustausch im ersten Raumbereich 52 zu gewährleisten, um somit eine Überhitzung zu vermeiden. Dabei kann auch ein Fluidstrom in den zweiten Raumbereich 54 stattfinden, beispielsweise über die Öffnungen 58, so dass auch dort im Einrückzustand der Überbrückungskupplung 48 ein zumindest geringfügiger Fluidabfluss möglich ist.

Im Ausrückzustand der Überbrückungskupplung wird durch die Fluidzufuhr in den zweiten Raumbereich 54 und die Möglichkeit, dass dieses Fluid zumindest radial außen in den ersten Raumbereich 52 gelangt, in Verbindung damit, dass auch beispielsweise über den ersten Fluidkanalbereich 60 Fluid in den ersten Raumbereich 52 eingeleitet wird, ein kontinuierlicher Fluidaustausch ermöglicht, wobei dieses dann beispielsweise über den zweiten Fluidkanalbereich 64 abströmen kann.

Zum Betreiben der hydrodynamischen Kopplungseinrichtung 10 ist eine Ansteuervorrichtung vorgesehen, welche durch Erzeugen entsprechender Ansteuerbefehle beispielsweise für eine Schaltventilanordnung dafür sorgt, dass ein Fluidzuführdruck über den bzw. die für einen jeweiligen Betriebszustand vorgesehenen Fluidzuführkanal/Fluidzuführkanäle zugeführt bzw. angelegt wird. Hierzu wird der beispielsweise durch eine Fluidpumpe im Getriebe generierte Fluiddruck genutzt, wobei durch entsprechend getaktete oder pulsierende Ansteuerung eines derartigen Schaltventils die Höhe des über einen jeweiligen Fluidkanalbereich zuzuführenden Fluiddrucks eingestellt werden kann. Die dabei sich im Innenraum 24, insbesondere den Raumbereichen 52, 54 einstellenden Druckverhältnisse hängen selbstverständlich auch vom Betriebszustand ab, entsprechen jedoch nicht notwendigerweise dem jeweiligen Fluidzuführdruck in einem Fluidkanalbereich.

Die gattungsgemäße US 2004/226795 A1 offenbart ein Verfahren zum Betreiben einer hydrodynamischen Kopplungseinrichtung des offenen 3-Leitungs-Typs, die hydrodynamische Kopplungseinrichtung umfassend eine mit Fluid gefüllte oder füllbare Gehäuseanordnung, ein mit der Gehäuseanordnung um eine Drehachse drehbares Pumpenrad, ein in der Gehäuseanordnung angeordnetes und mit einem Abtriebsorgan zur Drehung um die Drehachse gekoppeltes Turbinenrad, eine Überbrückungskupplung zur wahlweisen Herstellung einer Drehmomentübertragungsverbindung zwischen der Gehäuseanordnung und dem Abtriebsorgan, wobei die Überbrückungskupplung einen einen Innenraum der Gehäuseanordnung in einen das Turbinenrad enthaltenden ersten Raumbereich und einen zweiten Raumbereich teilenden Kupplungskolben umfasst, wobei zumindest bei ausgerückter Überbrückungskupplung der erste Raumbereich und der zweite Raumbereich in Fluidaustauschverbindung miteinander sind, einen zu dem ersten Raumbereich führenden ersten Fluidkanalbereich und einen zu dem ersten Raumbereich führenden zweiten Fluidkanalbereich, wobei dem ersten Raumbereich über den ersten Fluidkanalbereich oder/und den zweiten Fluidkanalbereich Fluid zuführbar ist und aus dem ersten Raumbereich über den ersten Fluidkanalbereich oder/und den zweiten Fluidkanalbereich Fluid ableitbar ist, einen dritten Fluidkanalbereich wenigstens zur Zufuhr von Fluid zu dem zweiten Raumbereich, bei welchem Verfahren zum Einrücken der Überbrückungskupplung im ersten Raumbereich ein den Kupplungskolben in Richtung Einrücken verstellender Fluiddruck bereitgestellt wird und zum Ausrücken der Überbrückungskupplung im zweiten Raumbereich ein den Kupplungskolben in Richtung Ausrücken verstellender Fluiddruck bereitgestellt wird. Dabei ist weiter vorgesehen, dass im Einrückzustand der Überbrückungskupplung oder/und im Ausrückzustand der Überbrückungskupplung oder/und zum Einrücken der Überbrückungskupplung oder/und zum Ausrücken der Überbrückungskupplung ein Fluidzuführdruck für den ersten Raumbereich oder/und ein Fluidzuführdruck für den zweiten Raumbereich in Abhängigkeit von wenigstens einer Betriebsgröße eingestellt wird. In diesem Zusammenhang wird noch auf die US 2003/042098A1; JP 62072958A; JP 11063208A und JP 2017262A verwiesen.

Des Weiteren ist aus der gattungsgemäßen US 2004/226795A1 die Auswertung des Termperaturverhaltens der Kopplungseinrichtung bekannt.

Es ist die Aufgabe der vorliegenden Erfindung, ein Verfahren zum Betreiben einer hydrodynamischen Kopplungseinrichtung des offenen 3-Leitungs-Typs vorzusehen, welches unter Ausschöpfung der technischen Möglichkeiten und Vorteile einer derartigen hydrodynamischen Kopplungseinrichtung einen effizienten Betrieb gewährleistet.

Erfindungsgemäß wird diese Aufgabe durch die Merkmale des Patentanspruchs 1 gelöst

Durch das Betreiben der hydrodynamischen Kopplungseinrichtung angepasst an einen jeweiligen Betriebszustand, dieser im Wesentlichen repräsentiert durch wenigstens eine Betriebsgröße, wird es möglich, unter Bereitstellung der jeweils erforderlichen Drehmomentwandlungs- bzw. Übertragungskapazität bei möglichst geringem Energieeinsatz dafür zu sorgen, dass eine übermäßige Erwärmung im Bereich der Kopplungseinrichtung vermieden werden kann, also eine ausreichende Fluidzirkulation durch den Innenraum hindurch gewährleistet ist.

Durch die Berücksichtigung der Temperatur im Bereich der Kopplungseinrichtung, also beispielsweise die Fluidtemperatur, wie sie in einem Getriebesumpf erfasst werden kann, wird es ebenso wie dann, wenn die Belastung der Kopplungseinrichtung berücksichtigt wird, welche wiederum in sehr engem Zusammenhang mit der Entstehung von Wärme in der Kopplungseinrichtung selbst steht, möglich, eine Überlastung, beispielsweise auch durch zu starke thermische Belastung, zu vermeiden.

Im Einrückzustand der Überbrückungskupplung ist diese vergleichsweise stark belastet und ein erhöhter Fluidzuführdruck für den ersten Raumbereich kann einerseits zu einem erhöhten Drehmomentübertragungsvermögen, also einer reduzierten Schlupfgefahr beitragen, kann andererseits aber auch gewährleisten, dass durch verstärkten Durchsatz mit Fluid ein ausreichender Wärmeabtrag erfolgt.

Durch verstärkte Fluidzufuhr in den ersten Raumbereich bei höherer Temperatur oder/und höherer Belastung wird bei ausgerückter Überbrückungskupplung, also im Allgemeinen im Drehmomentwandlungsbetrieb, ein verstärkter Fluiddurchsatz durch den ersten Raumbereich hindurch erreicht.

Eine weitere Lösung wird durch die Merkmale des Nebenanspruchs 2 beschrieben.

In diesem Betriebszustand wird ein verstärkter Fluiddurchsatz durch den zweiten Raumbereich sichergestellt.

Um insbesondere in Zuständen sehr hoher Belastung zumindest kurzzeitig den Fluiddruck im ersten Raumbereich sehr hoch halten zu können, wird vorgeschlagen, dass bei eingerückter Überbrückungskupplung bei höherer Belastung der Fluidzuführdruck für den ersten Raumbereich über den ersten Fluidkanalbereich und den zweiten Fluidkanalbereich bereitgestellt wird und bei geringerer Belastung der Fluidzuführdruck für den ersten Raumbereich über den ersten Fluidkanalbereich oder den zweiten Fluidkanalbereich bereitgestellt wird. Diese Maßnahme stellt gleichzeitig sicher, dass bei geringerer Belastung, also einem Zustand, wie er im Verhältnis zu sehr hoher Belastung deutlich öfter bzw. länger auftreten wird, ein ausreichender Fluidaustausch erreicht wird.

Zustände, in welchen die Kopplungseinrichtung sehr stark belastet wird, umfassen beispielsweise einen Fahrtrichtungsumkehrvorgang, also das so genannte Reversieren, insbesondere dann, wenn hierzu auch ein sehr starker Motorbremseffekt genutzt wird. Ein weiterer Zustand hoher Last kann beispielsweise dann eintreten, wenn bei im Einrückzustand gehaltener Überbrückungskupplung das Übersetzungsverhältnis in einem Getriebe geändert werden soll. Hier kann es zu Schaltstößen kommen, die sehr kurzzeitig zu einem starken Drehmomentenanstieg und mithin einer sehr hohen Belastung der Kopplungseinrichtung führen können. Die vorliegende Erfindung wird nachfolgend anhand der beiliegenden Figuren erläutert. Es zeigt:
- Fig. 1: den Aufbau einer hydrodynamischen Kopplungseinrichtung des offenen 3-Leitungs-Typs;
- Fig. 2 und 3: Flussdiagramme, welche den Betrieb der hydrodynamischen Kopplungseinrichtung verdeutlichen.

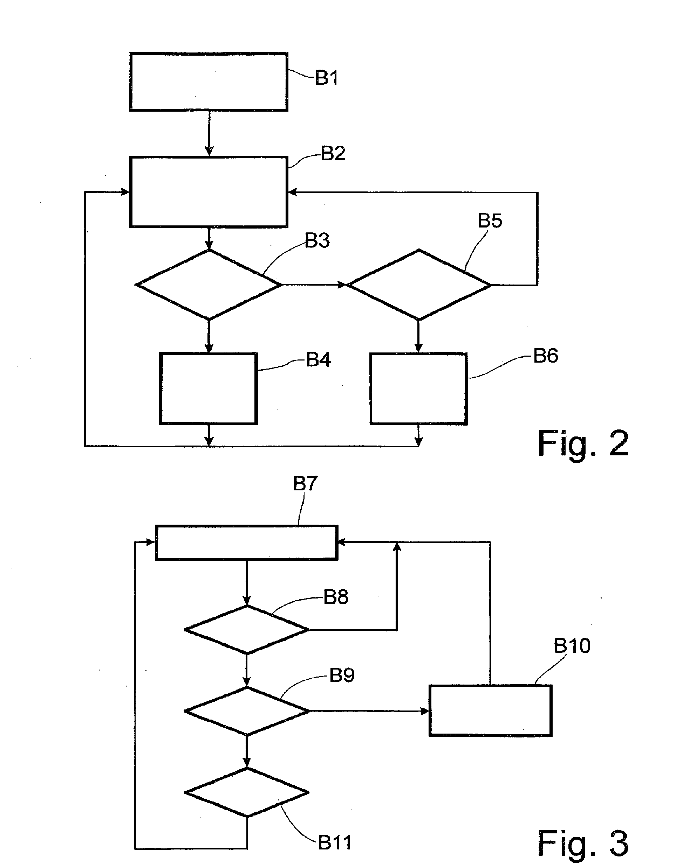

Die Ansteuerung bzw. der Betrieb einer hydrodynamischen Kopplungseinrichtung, also beispielsweise hydrodynamischer Drehmomentwandler, mit einem Aufbau, wie er beispielsweise vorangehend mit Bezug auf die Fig. 1 erläutert wurde, wird nachfolgend unter Bezugnahme auf die Flussdiagramme der Fig. 2 und 3 erläutert. Es ist hier darauf hinzuweisen, dass in diesen Flussdiagrammen in prinzipieller Art und Weise im Kontext der vorliegenden Erfindung relevante Maßnahmen, also beispielsweise Abfragen bzw. Entscheidungen, dargestellt sind.

Mit Bezug auf das Flussdiagramm der Fig. 2 wird im Folgenden die erfindungsgemäße Betriebsweise für den Fall einer offenen, also ausgerückten Überbrückungskupplung 48 erläutert. Hierbei wird für einen normalen Drehmomentwandlungsbetrieb in einem Block B1 beispielsweise für den ersten Fluidkanalbereich 60 ein Fluidzuführdruck von 5 bar bereitgestellt. Für den dritten Fluidkanalbereich 68 kann ein Fluidzuführdruck von 6 bar bereitgestellt werden, so dass grundsätzlich zwischen dem ersten Raumbereich 52 und dem zweiten Raumbereich 54 eine den Kupplungskolben 50 in Richtung Ausrücken beaufschlagende Druckdifferenz generiert wird. Man erkennt, dass hierbei der Fluidzuführdruck für den dritten Fluidkanalbereich 68 nur um etwa 1 bar, also geringfügig über dem Fluidzuführdruck für den ersten Fluidkanalbereich 60 liegt, was ausreicht, um die Überbrückungskupplung 48 ausgerückt zu halten, gleichwohl jedoch eine ausreichende Fluiddurchströmung des Innenraums 24 gewährleistet. In diesem Zustand wird an dem das Fluid abführenden zweiten Fluidkanalbereich 64 sich beispielsweise ein Druck im Bereich von etwa 3 bar einstellen.

In einem Block B2 können dann verschiedene Betriebszustände erfasst werden bzw. diese repräsentierende Informationen bereitgestellt werden. So kann beispielsweise die Fluid- bzw. Öltemperatur bereitgestellt werden, wie sie entweder in einem Ölsumpf eines Getriebes oder am Abströmbereich der Kopplungseinrichtung 10 erfasst wird. Die Belastung der Kopplungseinrichtung 10 kann aufgrund verschiedener in einem Fahrzeug generierter Informationen bereitgestellt werden. Beispielsweise kann das von einem Antriebsaggregat bereitgestellte und über den Antriebsstrang und mithin auch die Kopplungseinrichtung 10 zu leitende Drehmoment als den Lastzustand bezeichnende Größe berücksichtigt werden. Auch die Information, dass eine Fahrtrichtungsumkehr stattzufinden hat, also beispielsweise Schalten in den Rückwärtsgang oder Schalten aus dem Rückwärtsgang, ist eine den Lastzustand bezeichnende Information, da bei diesem so genannten Reversieren eine vergleichsweise hohe Belastung der Kopplungseinrichtung 10 auftritt. In einem Abfrageblock B3 kann untersucht werden, ob die Fluidtemperatur über einem zugeordneten Grenzwert liegt. Ist dies der Fall, ist also die Fluidtemperatur übermäßig hoch, so wird in einem Block B4 der Fluidzuführdruck für den ersten Fluidkanalbereich 60 auf 7 bar eingestellt bzw. erhöht, um einen verstärkten Fluiddurchsatz zu erreichen. Um die Überbrückungskupplung 48 ausgerückt zu halten, wird der Fluidzuführdruck für den dritten Fluidkanalbereich 68 auf 8 bar eingestellt bzw. erhöht, also etwas höher als der Fluiddruck am ersten Fluidkanalbereich 60. Dabei kann am zweiten Fluidkanalbereich 64 sich wiederum ein Fluiddruck von etwa 3 bar einstellen.

Die im Abfrageblock B3 zu erzeugende Reaktion, welche zum Block B4 führt, kann beispielsweise alternativ oder zusätzlich auch unter Berücksichtigung der Belastung erfolgen. Ist ein Fahrzeug in einem Reversiervorgang zu betreiben, also soll die Fahrtrichtung umgekehrt werden, so führt dies zu einer vergleichsweise hohen Belastung der Kopplungseinrichtung 10. Auch dies kann einen verstärkten Fluidaustausch erforderlich machen.

Ergibt die Abfrage im Abfrageblock B3, dass die Fluidtemperatur nicht übermäßig hoch ist, also nicht über einem Grenzwert liegt, so kann in einem weiteren Abfrageblock B5 die Belastung beurteilt werden. Wird festgestellt, dass diese gering ist, also beispielsweise auch geringer als in einem normalen Drehmomentwandlungsbetrieb, so ist es möglich, den Fluiddurchsatz zu verringern, insbesondere da auch die Fluidtemperatur nicht übermäßig hoch ist. Es kann dann beispielsweise der Fluidzuführdruck für den ersten Fluidkanalbereich 60 auf etwa 3 bar eingestellt oder gesenkt werden. Der Fluidzuführdruck für den dritten Fluidleitungsbereich 68 kann auf etwa 5 bar eingestellt bzw. verringert werden, so dass beispielsweise am zweiten Fluidkanalbereich 64 sich ein Druck von etwa 2 bar einstellt. Dies kann in einem Block B6 erfolgen.

Im weiteren Betrieb können dann wiederholt im Block B2 die verschiedenen Betriebsgrößen, welche auch eine Auswirkung auf den Betrieb der Kopplungseinrichtung 10 haben, überwacht bzw. bereitgestellt werden, um erforderlichenfalls eine Anpassung in der Ansteuerung der Kopplungseinrichtung 10 erreichen zu können.

Anhand des Flussdiagramms der Fig. 3 wird nachfolgend die Ansteuerung bzw. der Betrieb der Kopplungseinrichtung 10 bei geschlossener bzw. eingerückter bzw. einzurückender Überbrückungskupplung 48 erläutert. Auch hier werden zunächst bei einem Block B7 verschiedene den Betriebszustand eines Fahrzeugs bzw. auch der Kopplungseinrichtung repräsentierende Größen ermittelt bzw. bereitgestellt. Hier kann für einen normalen Drehmomentübertragungsbetrieb, also beispielsweise bei in einem normalen Bereich liegendem Antriebsdrehmoment oder Bremsdrehmoment, der Fluidzuführdruck für den ersten Fluidkanalbereich 60 auf etwa 8 bar eingestellt werden. Der dritte Fluidkanalbereich 68 wird im Wesentlichen drucklos geschaltet, so dass beispielsweise bedingt dadurch, dass über die Öffnungen 58 ein Fluidstrom vom ersten Raumbereich 52 zum zweiten Raumbereich 54 stattfinden kann, sich ein etwas erhöhter Druck einstellen kann, der bis zu 2 bar betragen kann, wenn das Fluid über einen Fluidkühler und nicht direkt in einen Fluidsumpf geleitet wird. An dem zweiten Fluidkanalbereich 64 ergibt sich dann beispielsweise ein Druck von etwa 5 bar. Mit derartigen Druckverhältnissen wird einerseits sichergestellt, dass der Kupplungskolben 50 ausreichend fest gegen das Gehäuse 12 gepresst wird, um das zu übertragende Drehmoment ohne Schlupf weiterleiten zu können. Andererseits wird ein ausreichender Fluidaustausch gewährleistet.

In einem Abfrageblock B8 kann ermittelt werden, ob das Fahrzeug im Leerlaufbetrieb ist. Ist dies nicht der Fall, so werden die beispielsweise beruhend auf den Informationen des Blocks B7 eingestellten Druckverhältnisse beibehalten.

Ergibt die Abfrage des Abfrageblocks B8, dass das Fahrzeug im Leerlaufbetrieb ist, wird in einem weiteren Abfrageblock B9 ermittelt, ob die Überbrückungskupplung 48 tatsächlich geschlossen ist. Ist dies nicht der Fall, so kann in einem Block B10 dann für den Leerlaufbetrieb des Fahrzeugs und mithin auch der Überbrückungskupplung 48 für den ersten Fluidkanalbereich 60 ein Fluidzuführdruck von beispielsweise 3 bar eingestellt werden. Der dritte Fluidkanalbereich 68 wird wieder drucklos geschaltet, und am zweiten Fluidkanalbereich 64 kann sich bedingt durch den Fluidzuführdruck für den ersten Kanalbereich 60 ein Fluiddruck von beispielsweise 2 bar einstellen. Die in diesem Zustand zwischen den beiden Raumbereichen 52 und 54 aufgebaute Druckdifferenz ist ausreichend, um im Leerlaufzustand ein Schlupfen der Überbrückungskupplung 48 zu verhindern.

In einem Abfrageblock B11 kann bei bereits geschlossener Überbrückungskupplung 48 verifiziert werden, ob diese mit den für den Leerlaufbetrieb vorgesehenen Druckverhältnissen im Einrückzustand gehalten wird. Ist dies der Fall, so kann die Prozedur zur Aktualisierung erneut durchlaufen werden. Ist dies nicht der Fall, können die für den Leerlaufbetrieb vorgesehenen Druckverhältnisse eingestellt werden. Dies bedeutet, dass auch vom Abfrageblock B11 beispielsweise zum Block B10 geschritten werden kann und die entsprechenden Druckverhältnisse eingestellt werden können.

Ein Zustand, in welchem die Kopplungseinrichtung 10 und insbesondere die Überbrückungskupplung 48 im Einrückzustand derselben stark belastet werden kann, liegt dann vor, wenn in einem im Antriebsstrang folgenden Getriebe das Übersetzungsverhältnis geändert werden soll, also beispielsweise ein Gangwechsel vorgenommen werden soll, ohne dabei die Überbrückungskupplung auszurücken. Dies erfordert eine sehr hohe Drehmomentübertragungskapazität in der Überbrückungskupplung 48 und mithin einen entsprechend hohen Anpressdruck für den Kupplungskolben 50. Hierzu kann derart vorgegangen werden, dass bei Vorliegen entsprechender Information, also z. B. eines Schaltbefehls, sowohl über den ersten Fluidkanalbereich 60 als auch den zweiten Fluidkanalbereich 64 ein sehr hoher Fluidzuführdruck von beispielsweise 9 bar angelegt bzw. zugeführt wird. Dies führt einerseits zu einem vergleichsweise schnellen Druckanstieg im ersten Raumbereich 52. Andererseits wird eine den Fluiddruck im ersten Raumbereich 52 mindernde Fluidleckage beispielsweise über den zweiten Fluidkanalbereich 64 ausgeschlossen. Eine Fluidleckage kann lediglich über die Öffnungen 58 bzw. im zweiten Raumbereich 54 erfolgen. Diese ist jedoch vergleichsweise gering. In einem derartigen, allgemein auch als Boostzustand beschriebenen Betrieb kann über die Überbrückungskupplung 48 ein sehr hohes Drehmoment übertragen werden, so dass auch sehr hohe Drehmomentstöße, wie sie bei dem spontanen Wechsel des Übersetzungsverhältnisses auftreten können, nicht zu einem Schlupf der Überbrückungskupplung 48 führen.

Die vorliegende Erfindung ermöglicht eine an verschiedene Betriebsgrößen optimiert angepasste Betriebsweise einer hydrodynamischen Kopplungseinrichtung des offenen 3-Leitungs-Typs, insbesondere hydrodynamischer Drehmomentwandler, so dass auch dann, wenn sehr hohe Belastungen bzw. Temperaturen im Bereich der Kopplungseinrichtung vorliegen, eine Überlastung ausgeschlossen werden kann, gleichwohl jedoch das gewünschte Drehmomentübertragungsvermögen sichergestellt ist. Somit eignet sich die erfindungsgemäße Betriebsweise insbesondere in Verbindung damit, dass sie bei einer hydrodynamischen Kopplungseinrichtung des offenen 3-Leitungs-Typs zum Einsatz gelangt, vor allem dann, wenn sie bei einem Nutzfahrzeug angewandt wird.

## Patentansprüche

1. Verfahren zum Betreiben einer hydrodynamischen Kopplungseinrichtung des offenen 3-Leitungs-Typs, die hydrodynamische Kopplungseinrichtung umfassend eine mit Fluid gefüllte oder füllbare Gehäuseanordnung (12), ein mit der Gehäuseanordnung (12) um eine Drehachse (A) drehbares Pumpenrad (20), ein in der Gehäuseanordnung (12) angeordnetes und mit einem Abtriebsorgan (32) zur Drehung um die Drehachse (A) gekoppeltes Turbinenrad (26), eine Überbrückungskupplung (48) zur wahlweisen Herstellung einer Drehmomentübertragungsverbindung zwischen der Gehäuseanordnung (12) und dem Abtriebsorgan (32), wobei die Überbrückungskupplung (48) einen einen Innenraum (24) der Gehäuseanordnung (12) in einen das Turbinenrad (26) enthaltenden ersten Raumbereich (52) und einen zweiten Raumbereich (54) teilenden Kupplungskolben (50) umfasst, wobei zumindest bei ausgerückter Überbrückungskupplung (48) der erste Raumbereich (52) und der zweite Raumbereich (54) in Fluidaustauschverbindung miteinander sind, einen zu dem ersten Raumbereich (52) führenden ersten Fluidkanalbereich (60) und einen zu dem ersten Raumbereich (52) führenden zweiten Fluidkanalbereich (64), wobei dem ersten Raumbereich (52) über den ersten Fluidkanalbereich (60) oder/und den zweiten Fluidkanalbereich (64) Fluid zuführbar ist und aus dem ersten Raumbereich (52) über den ersten Fluidkanalbereich (60) oder/und den zweiten Fluidkanalbereich (64) Fluid ableitbar ist, einen dritten Fluidkanalbereich (68) wenigstens zur Zufuhr von Fluid zu dem zweiten Raumbereich (54), bei welchem Verfahren zum Einrücken der Überbrückungskupplung im ersten Raumbereich (52) ein den Kupplungskolben (50) in Richtung Einrücken verstellender Fluiddruck bereitgestellt wird und zum Ausrücken der Überbrückungskupplung (48) im zweiten Raumbereich (54) ein den Kupplungskolben (50) in Richtung Ausrücken verstellender Fluiddruck bereitgestellt wird, wobei im Einrückzustand der Überbrückungskupplung (48) oder/und im Ausrückzustand der Überbrückungskupplung (48) oder/und zum Einrücken der Überbrückungskupplung (48) oder/und zum Ausrücken der Überbrückungskupplung (48) ein Fluidzuführdruck für den ersten Raumbereich (52) oder/und ein Fluidzuführdruck für den zweiten Raumbereich (54) in Abhängigkeit von wenigstens einer Betriebsgröße eingestellt wird, wobei die wenigstens eine Betriebsgröße eine Temperatur im Bereich der Kopplungseinrichtung (10), insbesondere Fluidtemperatur, oder/und eine Belastung der Kopplungseinrichtung (10) im Drehmomentübertragungs/Wandlungsbetrieb umfasst, **dadurch gekennzeichnet, dass** bei ausgerückter Überbrückungskupplung (48) der Fluidzuführdruck für den ersten Raumbereich (52) bei höherer Temperatur oder/und höherer Belastung auf einen höheren Wert eingestellt wird, als bei niedrigerer Temperatur oder/und geringerer Belastung.

2. Verfahren zum Betreiben einer hydrodynamischen Kopplungseinrichtung des offenen 3-Leitungs-Typs, die hydrodynamische Kopplungseinrichtung umfassend eine mit Fluid gefüllte oder füllbare Gehäuseanordnung (12), ein mit der Gehäuseanordnung (12) um eine Drehachse (A) drehbares Pumpenrad (20), ein in der Gehäuseanordnung (12) angeordnetes und mit einem Abtriebsorgan (32) zur Drehung um die Drehachse (A) gekoppeltes Turbinenrad (26), eine Überbrückungskupplung (48) zur wahlweisen Herstellung einer Drehmomentübertragungsverbindung zwischen der Gehäuseanordnung (12) und dem Abtriebsorgan (32), wobei die Überbrückungskupplung (48) einen einen Innenraum (24) der Gehäuseanordnung (12) in einen das Turbinenrad (26) enthaltenden ersten Raumbereich (52) und einen zweiten Raumbereich (54) teilenden Kupplungskolben (50) umfasst, wobei zumindest bei ausgerückter Überbrückungskupplung (48) der erste Raumbereich (52) und der zweite Raumbereich (54) in Fluidaustauschverbindung miteinander sind, einen zu dem ersten Raumbereich (52) führenden ersten Fluidkanalbereich (60) und einen zu dem ersten Raumbereich (52) führenden zweiten Fluidkanalbereich (64), wobei dem ersten Raumbereich (52) über den ersten Fluidkanalbereich (60) oder/und den zweiten Fluidkanalbereich (64) Fluid zuführbar ist und aus dem ersten Raumbereich (52) über den ersten Fluidkanalbereich (60) oder/und den zweiten Fluidkanalbereich (64) Fluid ableitbar ist, einen dritten Fluidkanalbereich (68) wenigstens zur Zufuhr von Fluid zu dem zweiten Raumbereich (54), bei welchem Verfahren zum Einrücken der Überbrückungskupplung im ersten Raumbereich (52) ein den Kupplungskolben (50) in Richtung Einrücken verstellender Fluiddruck bereitgestellt wird und zum Ausrücken der Überbrückungskupplung (48) im zweiten Raumbereich (54) ein den Kupplungskolben (50) in Richtung Ausrücken verstellender Fluiddruck bereitgestellt wird, wobei im Einrückzustand der Überbrückungskupplung (48) oder/und im Ausrückzustand der Überbrückungskupplung (48) oder/und zum Einrücken der Überbrückungskupplung (48) oder/und zum Ausrücken der Überbrückungskupplung (48) ein Fluidzuführdruck für den ersten Raumbereich (52) oder/und ein Fluidzuführdruck für den zweiten Raumbereich (54) in Abhängigkeit von wenigstens einer Betriebsgröße eingestellt wird, wobei die wenigstens eine Betriebsgröße eine Temperatur im Bereich der Kopplungseinrichtung (10), insbesondere Fluidtemperatur, oder/und eine Belastung der Kopplungseinrichtung (10) im Drehmomentübertragungs/Wandlungsbetrieb umfasst, **dadurch gekennzeichnet, dass** bei ausgerückter Überbrückungskupplung (48) der Fluidzuführdruck für den zweiten Raumbereich (54) bei höherer Temperatur oder/und höherer Belastung auf einen höheren Wert eingestellt wird, als bei niedrigerer Temperatur oder/und geringerer Belastung.

3. Verfahren nach einem der Ansprüche 1 oder 2, **dadurch gekennzeichnet, dass** bei eingerückter Überbrückungskupplung (48) bei höherer Belastung der Fluidzuführdruck für den ersten Raumbereich (52) über den ersten Fluidkanalbereich (60) und den zweiten Fluidkanalbereich (64) bereitgestellt wird und bei geringerer Belastung der Fluidzuführdruck für den ersten Raumbereich (52) über den ersten Fluidkanalbereich (60) oder den zweiten Fluidkanalbereich (54) bereitgestellt wird.

4. Verfahren nach einem der Ansprüche 1 oder 3, **dadurch gekennzeichnet, dass** dann, wenn die Kopplungseinrichtung (10) während eines Fahrtrichtungsumkehrvorgangs zur Drehmomentübertragung/Wandlung betrieben wird, oder/und wenn die Überbrückungskupplung (48) während eines Übersetzungsverhältnisänderungsvorgangs im Einrückzustand ist, ein Zustand höherer Belastung vorliegt.

## Claims

1. Method for operating a hydrodynamic coupling device of the open 3-conduit type, the hydrodynamic coupling device comprising a fluid-filled or fluid-fillable housing arrangement (12), a pump impeller (20), rotatable together with the housing arrangement (12) about an axis of rotation (A), a turbine wheel (26) arranged in the housing arrangement (12) and coupled to an output member (32) for rotation about the axis of rotation (A), a bridge-over clutch (48) for selectively making a torque transfer connection between the housing arrangement (12) and the output member (32), the bridge-over clutch (48) comprising a clutch piston (50) dividing an inner space (24) of the housing arrangement (12) into a first spatial region (52) containing the turbine wheel (26) and a second spatial region (54), the first spatial region (52) and the second spatial region (54) being in fluid exchange connection with one another at least when the bridge-over clutch (48) is disengaged, a first fluid-duct region (60) leading to the first spatial region (52) and a second fluid-duct region (64) leading to the first spatial region (52), fluid being deliverable to the first spatial region (52) via the first fluid-duct region (60) and/or via the second fluid-duct region (64) and fluid being dischargeable from the first spatial region (52) via the first fluid-duct region (60) and/or via the second fluid-duct region (64), a third fluid-duct region (68) at least for the delivery of fluid to the second spatial region (54), in which method, for the engagement of the bridge-over clutch, a fluid pressure adjusting the clutch piston (50) in the engagement direction is provided in the first spatial region (52) and, for the disengagement of the bridge-over clutch (48), a fluid pressure adjusting the clutch piston (50) in the disengagement direction is provided in the second spatial region (54), a fluid delivery pressure for the first spatial region (52) and/or a fluid delivery pressure for the second spatial region (54) being set as a function of at least one operating variable in the engaged state of the bridge-over clutch (48) and/or in the disengaged state of the bridge-over clutch (48) and/or for the engagement of the bridge-over clutch (48) and/or for the disengagement of the bridge-over clutch (48), the at least one operating variable comprising a temperature in the region of the coupling device (10), in particular a fluid temperature, and/or a load upon the coupling device (10) in torque transfer/conversion operation, **characterized in that**, when the bridge-over clutch (48) is disengaged, the fluid delivery pressure for the first spatial region (52) is set at a higher value when the temperature is higher and/or the load is higher than when the temperature is lower and/or the load is lower.

2. Method for operating a hydrodynamic coupling device of the open 3-conduit type, the hydrodynamic coupling device comprising a fluid-filled or fluid-fillable housing arrangement (12), a pump impeller (20) rotatable together with the housing arrangement (12) about an axis of rotation (A), a turbine wheel (26) arranged in the housing arrangement (12) and coupled to an output member (32) for rotation about the axis of rotation (A), a bridge-over clutch (48) for selectively making a torque transfer connection between the housing arrangement (12) and the output member (32), the bridge-over clutch (48) comprising a clutch piston (50) dividing an inner space (24) of the housing arrangement (12) into a first spatial region (52) containing the turbine wheel (26) and a second spatial region (54), the first spatial region (52) and the second spatial region (54) being in fluid exchange connection with one another at least when the bridge-over clutch (48) is disengaged, a first fluid-duct region (60) leading to the first spatial region (52) and a second fluid-duct region (64) leading to the first spatial region (52), the fluid being deliverable to the first spatial region (52) via the first fluid-duct region (60) and/or via the second fluid-duct region (64) and fluid being dischargeable from the first spatial region (52) via the first fluid-duct region (60) and/or via the second fluid-duct region (64), a third fluid-duct region (68) at least for the delivery of fluid to the second spatial region (54), in which method, for the engagement of the bridge-over clutch, a fluid pressure adjusting the clutch piston (50) in the engagement direction is provided in the first spatial region (52) and, for the disengagement of the bridge-over clutch (48), a fluid pressure adjusting the clutch piston (50) in the disengagement direction is provided in the second spatial region (54), a fluid delivery pressure for the first spatial region (52) and/or a fluid delivery pressure for the second spatial region (54) being set as a function of at least one operating variable in the engaged state of the bridge-over clutch (48) and/or in the disengaged state of the bridge-over clutch (48) and/or for the engagement of the bridge-over clutch (48) and/or for the disengagement of the bridge-over clutch (48), the at least one operating variable comprising a temperature in the region of the coupling device (10), in particular a fluid temperature, and/or a load upon the coupling device (10) in torque transfer/conversion operation, **characterized in that**, when the bridge-over clutch (48) is disengaged, the fluid delivery pressure for the second spatial region (54) is set at a higher value when the temperature is higher and/or when the load is higher than when the temperature is lower and/or the load is lower.

3. Method according to either one of Claims 1 and 2, **characterized in that**, with the bridge-over clutch (48) engaged, when the load is higher the fluid delivery pressure for the first spatial region (52) is provided via the first fluid-duct region (60) and via the second fluid-duct region (64), and, when the load is lower, the fluid delivery pressure for the first spatial region (52) is provided via the first fluid-duct region (60) or via the second fluid-duct region (54).

4. Method according to either one of Claims 1 and 3, **characterized in that**, when the coupling device (10) is operated for torque transfer/conversion during a direction-of-travel changing action and/or when the bridge-over clutch (48) is in the engaged state during a step-up ratio changing action, a state of higher load prevails.

## Revendications

1. Procédé pour faire fonctionner un dispositif de couplage hydrodynamique du type à trois conduites ouvert, le dispositif de couplage hydrodynamique comprenant un agencement de boîtier (12) rempli ou pouvant être rempli de fluide, une roue de pompe (20) pouvant tourner autour d'un axe de rotation (A) avec l'agencement de boîtier (12), une roue de turbine (26) disposée dans l'agencement de boîtier (12) et accouplée à un organe de prise de force (32) pour tourner autour de l'axe de rotation (A), un embrayage de pontage (48) pour établir de manière sélective une connexion de transfert de couple entre l'agencement de boîtier (12) et l'organe de prise de force (32), l'embrayage de pontage (48) comprenant un piston d'embrayage (50) divisant un espace interne (24) de l'agencement de boîtier (12) en une première région spatiale (52) contenant la roue de turbine (26) et une deuxième région spatiale (54), au moins lorsque l'embrayage de pontage (48) est débrayé, la première région spatiale (52) et la deuxième région spatiale (54) étant en liaison d'échange fluidique l'une avec l'autre, une première région de canal fluidique (60) conduisant à la première région spatiale (52) et une deuxième région de canal fluidique (64) conduisant à la première région spatiale (52), du fluide pouvant être acheminé à la première région spatiale (52) par le biais de la première région de canal fluidique (60) et/ou de la deuxième région de canal fluidique (64), et du fluide pouvant être évacué hors de la première région spatiale (52) par le biais de la première région de canal fluidique (60) et/ou par le biais de la deuxième région de canal fluidique (64), une troisième région de canal fluidique (68) au moins pour l'alimentation de fluide à la deuxième région spatiale (54), dans lequel procédé, pour l'embrayage de l'embrayage de pontage, une pression de fluide réglant le piston d'embrayage (50) dans la direction de l'embrayage est fournie dans la première région spatiale (52), et pour le débrayage de l'embrayage de pontage (48), une pression de fluide réglant le piston d'embrayage (50) dans la direction du débrayage est fournie dans la deuxième région spatiale (54), une pression d'alimentation en fluide pour la première région spatiale (52) et/ou une pression d'alimentation en fluide pour la deuxième région spatiale (54) étant ajustées en fonction d'au moins une grandeur de fonctionnement dans l'état d'embrayage de l'embrayage de pontage (48) et/ou dans l'état de débrayage de l'embrayage de pontage (48) et/ou pour l'embrayage de l'embrayage de pontage (48) et/ou pour le débrayage de l'embrayage de pontage (48), l'au moins une grandeur de fonctionnement comprenant une température dans la région du dispositif de couplage (10), en particulier une température de fluide, et/ou une sollicitation du dispositif de couplage (10) pendant le fonctionnement de transfert/conversion de couple, **caractérisé en ce que**, lorsque l'embrayage de pontage (48) est débrayé, la pression d'alimentation en fluide pour la première région spatiale (52) est ajustée à une valeur plus élevée pour une température plus élevée et/ou pour une sollicitation plus élevée que pour une température plus basse et/ou une sollicitation plus faible.

2. Procédé pour faire fonctionner un dispositif de couplage hydrodynamique du type à trois conduites ouvert, le dispositif de couplage hydrodynamique comprenant un agencement de boîtier (12) rempli ou pouvant être rempli de fluide, une roue de pompe (20) pouvant tourner autour d'un axe de rotation (A) avec l'agencement de boîtier (12), une roue de turbine (26) disposée dans l'agencement de boîtier (12) et accouplée à un organe de prise de force (32) pour tourner autour de l'axe de rotation (A), un embrayage de pontage (48) pour établir de manière sélective une connexion de transfert de couple entre l'agencement de boîtier (12) et l'organe de prise de force (32), l'embrayage de pontage (48) comprenant un piston d'embrayage (50) divisant un espace interne (24) de l'agencement de boîtier (12) en une première région spatiale (52) contenant la roue de turbine (26) et une deuxième région spatiale (54), au moins lorsque l'embrayage de pontage (48) est débrayé, la première région spatiale (52) et la deuxième région spatiale (54) étant en liaison d'échange fluidique l'une avec l'autre, une première région de canal fluidique (60) conduisant à la première région spatiale (52) et une deuxième région de canal fluidique (64) conduisant à la première région spatiale (52), du fluide pouvant être acheminé à la première région spatiale (52) par le biais de la première région de canal fluidique (60) et/ou de la deuxième région de canal fluidique (64), et du fluide pouvant être évacué hors de la première région spatiale (52) par le biais de la première région de canal fluidique (60) et/ou par le biais de la deuxième région de canal fluidique (64), une troisième région de canal fluidique (68) au moins pour l'alimentation de fluide à la deuxième région spatiale (54), dans lequel procédé, pour l'embrayage de l'embrayage de pontage, une pression de fluide réglant le piston d'embrayage (50) dans la direction de l'embrayage est fournie dans la première région spatiale (52), et pour le débrayage de l'embrayage de pontage (48), une pression de fluide réglant le piston d'embrayage (50) dans la direction du débrayage est fournie dans la deuxième région spatiale (54), une pression d'alimentation en fluide pour la première région spatiale (52) et/ou une pression d'alimentation en fluide pour la deuxième région spatiale (54) étant ajustées en fonction d'au moins une grandeur de fonctionnement dans l'état d'embrayage de l'embrayage de pontage (48) et/ou dans l'état de débrayage de l'embrayage de pontage (48) et/ou pour l'embrayage de l'embrayage de pontage (48) et/ou pour le débrayage de l'embrayage de pontage (48), l'au moins une grandeur de fonctionnement comprenant une température dans la région du dispositif de couplage (10), en particulier une température de fluide, et/ou une sollicitation du dispositif de couplage (10) pendant le fonctionnement de transfert/conversion de couple, **caractérisé en ce que**, lorsque l'embrayage de pontage (48) est débrayé, la pression d'alimentation en fluide pour la deuxième région spatiale (54) est ajustée à une valeur plus élevée pour une température plus élevée et/ou pour une sollicitation plus élevée que pour une température plus basse et/ou une sollicitation plus faible.

3. Procédé selon l'une quelconque des revendications 1 ou 2, **caractérisé en ce que**, lorsque l'embrayage de pontage (48) est embrayé pour une sollicitation plus élevée, la pression d'alimentation en fluide pour la première région spatiale (52) est fournie par le biais de la première région de canal fluidique (60) et la deuxième région de canal fluidique (64) et pour une sollicitation plus faible, la pression d'alimentation en fluide pour la première région spatiale (52) est fournie par le biais de la première région de canal fluidique (60) ou la deuxième région de canal fluidique (54).

4. Procédé selon l'une quelconque des revendications 1 ou 3, **caractérisé en ce que** lorsque le dispositif de couplage (10) fonctionne pendant une opération d'inversion du sens de conduite de manière à effectuer un transfert/une conversion de couple, et/ou lorsque l'embrayage de pontage (48) est dans l'état d'embrayage pendant une opération de variation de rapport de démultiplication, il existe un état de sollicitation plus élevée.
